(19) Europäisches Patentamt
European Patent Office
Office européen des brevets

(11) EP 4 796 706 A1

(12) EUROPEAN PATENT APPLICATION
published in accordance with Art. 153(4) EPC

(43) Date of publication:
**26.08.2026 Bulletin 2026/35**

(21) Application number: **23956042.8**

(22) Date of filing: **17.10.2023**

(51) International Patent Classification (IPC):
***D21H 11/18*** (2006.01) ***C08J 5/18*** (2006.01) ***C08L 1/02*** (2006.01) ***D21J 1/00*** (2006.01) ***D21J 3/00*** (2006.01)

(52) Cooperative Patent Classification (CPC):
**C08J 5/18; C08L 1/02; D21H 11/18; D21J 1/00; D21J 3/00**

(86) International application number:
**PCT/JP2023/037607**

(87) International publication number:
**WO 2025/083791 (24.04.2025 Gazette 2025/17)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicants:
- **Kami Shoji Co., Ltd.**
  **Shikokuchuo-shi, Ehime 799-0404 (JP)**
- **Yamamoto Eng.Works Co., Ltd.**
  **Komatsushima-shi, Tokushima 773-0007 (JP)**

(72) Inventors:
- **KASHIWADA, Shosaku**
  **Chuo-shi, Ehime 799-0404 (JP)**
- **YOKOTA, Hiroshi**
  **Chuo-shi, Ehime 799-0404 (JP)**
- **UENO, Keisuke**
  **Chuo-shi, Ehime 799-0404 (JP)**
- **OONO, Shinya**
  **Komatsushima-shi, Tokushima 773-0007 (JP)**
- **MOTOKI, Takahiro**
  **Komatsushima-shi, Tokushima 773-0007 (JP)**
- **TSUBOI, Kana**
  **Komatsushima-shi, Tokushima 773-0007 (JP)**
- **MIYAMOTO, Nobutaka**
  **Komatsushima-shi, Tokushima 773-0007 (JP)**

(74) Representative: **TBK**
**Bavariaring 4-6**
**80336 München (DE)**

# (54) CELLULOSE MOLDED BODY AND METHOD FOR PRODUCING SAME

(57) The disclosure provides a method for producing a cellulose formed body, including a step of generating an aqueous dispersion having a concentration of 10% or less, which contains a natural cellulose fiber including a cellulose microfiber having a fiber width of 1 μm or less, a step of press-forming the aqueous dispersion while dehydrating the aqueous dispersion by applying a pressing pressure of 30 kgf/cm$^2$ or less to generate a dehydrated body having a moisture content of 10 times or less a weight of cellulose, and a step of drying the dehydrated body by applying a pressing pressure of 10 MPa or less at a temperature of 100°C or higher and 150°C or lower to produce the cellulose formed body in which the natural cellulose fiber is amorphized. The amorphization of the natural cellulose fiber is specified using, as indices, a degree of crystallinity calculated by a Segal method, a degree of crystallinity calculated by a curve fitting method, a crystallinity index, a first degree of crystallinity or a second degree of crystallinity determined from an infrared absorption spectrum, an oxygen permeability, a maximum water content, and the like.

*FIG. 10*

EP 4 796 706 A1

## Description

### Technical Field

The present disclosure relates to a cellulose formed body and a method for producing the same.

### Background Art

Cellulose, which is a main component of plant fibers, has physical properties of being lightweight, having high strength and elasticity, and having a low thermal expansion coefficient. In addition to such physical properties, cellulose is abundantly present on the earth, has a small environmental load during production and disposal, has a character as a sustainable resource that is 100% renewable, and is attracting attention as a next-generation material both domestically and internationally.

Due to such physical properties, cellulose is expected as biomass plastic to replace plastic, and expansion to structural materials, electronic materials, optical materials, packaging materials, and the like, and development of new applications are actively carried out.

A cellulose formed body generated using cellulose as a raw material can be formed not only into a two-dimensional planar sheet shape but also into a three-dimensional structure (see Patent Document 1).

The cellulose formed body is produced by a step of preparing an aqueous dispersion containing cellulose (forming a slurry), dehydrating the aqueous dispersion (preliminary dehydration step), and pressurizing the aqueous dispersion while heating the aqueous dispersion (pressurization step), as described in, for example, paragraph [0018] of Patent Document 2. The cellulose formed body disclosed in Patent Document 2 is a table tennis racket.

A method for producing the cellulose formed body disclosed in Patent Document 2 is merely an example, and various other methods have been suggested. For example, Patent Document 3 discloses a method of dehydrating an aqueous dispersion containing cellulose, pressurizing the aqueous dispersion after the dehydration has progressed to some extent, taking out the aqueous dispersion from a mold after the pressurization, and pressing the aqueous dispersion with a press machine while heating the aqueous dispersion or drying the aqueous dispersion with a dryer (see [0019] to [0054] of Patent Document 3).

### Prior Art Documents

#### Patent Documents

Patent Document 1: Japanese Patent Application Laid-Open No. 2016-094683
Patent Document 2: Japanese Patent Application Laid-Open No. 2019-084073
Patent Document 3: Japanese Patent Application Laid-Open No. 2021-050463

### Summary

#### Problem to be Solved

As described in Patent Documents 1 to 3, there are various methods for producing a cellulose formed body, and the method is not necessarily limited to one method. If we were to look for common points, it would be a step of preparing an aqueous dispersion containing cellulose, dehydrating the aqueous dispersion, and then drying the aqueous dispersion.

In each of these steps, in the traditional method for producing a cellulose formed body, it is necessary to apply a high pressure in a step of dehydrating an aqueous dispersion containing cellulose.

For example, Patent Document 1 describes that a load of 400 kg is applied for 3.0 hours or a load of 400 kg is applied for 2.5 hours (see paragraphs [0030] and [0031] of Patent Document 1). Patent Document 3 describes a pressure of 20 MPa or greater, more preferably 30 MPa, and still more preferably 40 MPa is applied in the final step after the initial step in the dehydration step in which a pressure of 2.5 kPa or less is applied (see paragraphs [0051] and [0053] of Patent Document 3).

The step of applying a high pressure to the aqueous dispersion containing cellulose as described above is a heavy burden in terms of production equipment, the production time, and the energy cost required for producing a cellulose formed body. In order to spread the cellulose formed body, a production method that enables production of the cellulose formed body more easily is required.

An object of the present disclosure is to reduce a burden required for producing a cellulose formed body.

Means for Solving the Problem

An aspect of a method for producing a cellulose formed body is a method includes generating an aqueous dispersion having a concentration of greater than 0% and 10% or less, which contains at least one of a natural cellulose fiber having a fiber width of greater than 1 μm and 100 μm or less and a cellulose microfiber having a fiber width of 1 nm or greater and 1 μm or less, press-forming the aqueous dispersion while dehydrating the aqueous dispersion by applying a pressurizing force with a pressing pressure of greater than 0 $kgf/cm^2$ and 30 $kgf/cm^2$ or less to generate a dehydrated body having a moisture content of 0 times or greater and 10 times or less a weight of cellulose, and drying the dehydrated body by applying a pressurizing force with a pressing pressure of greater than 0 MPa and 10 MPa or less at a temperature of 100°C or higher and 150°C or lower.

Another aspect of the method for producing a cellulose formed body is a method includes generating an aqueous dispersion having a concentration of greater than 0% and 10% or less, which contains at least one of a natural cellulose fiber having a fiber width of greater than 1 μm and 100 μm or less and a cellulose microfiber having a fiber width of 1 nm or greater and 1 μm or less, applying the aqueous dispersion in a sheet shape, and drying the applied aqueous dispersion at a temperature of 100°C or higher and 150°C or lower.

An aspect of a cellulose formed body includes a natural cellulose fiber that includes a cellulose microfiber having a fiber width of 1 nm or greater and 1 μm or less, in which a degree of crystallinity obtained from Equation (1) is 0% or greater and 80% or less.
[Equation sequence number 1]

$$\text{Degree of crystallinity (\%)} = (1 - I_{am}/I_{200}) \times 100 \qquad (1)$$

I: Each diffraction intensity measured by X-ray diffraction method
$I_{am}$: Diffraction intensity of amorphous portion (2θ = 18.5°)
$I_{200}$: Diffraction intensity of crystal lattice plane (200 plane, peak around 2θ=22.6) characteristic of cellulose I type in natural cellulose

Another aspect of the cellulose formed body includes a natural cellulose fiber that includes a cellulose microfiber having a fiber width of 1 nm or greater and 1 μm or less, in which a degree of crystallinity obtained from Equation (2) is 0% or greater and 55% or less.
[Equation sequence number 2]

$$\text{Degree of crystallinity (\%)} = \{(\text{Area crystal})/(\text{Area crystal} + \text{Area non-crystal})\} \times 100 \qquad (2)$$

Area crystal: area under curve obtained by integrating each crystal curve when X-ray diffraction graph, which is composite of plurality of graphs, is separated into plurality of single curves using peak division in curve fitting method
Area non-crystal: area under curve obtained by integrating non-crystal curve obtained in the same manner as that for Area crystal

Still another aspect of the cellulose formed body includes a natural cellulose fiber that includes a cellulose microfiber having a fiber width of 1 nm or greater and 1 μm or less, in which a crystallinity index obtained from Equation (3) using an integral value of a signal obtained from a nuclear magnetic resonance device is 0% or greater and 48% or less.
[Equation sequence number 3]

$$\text{Crystallinity index} = (\text{signal integral value of 93 ppm - 86 ppm})/\{(\text{signal integral value of 93 ppm - 86 ppm}) + (\text{signal integral value of 86 ppm - 80 ppm})\} \times 100 \qquad (3)$$

Signal of 93 ppm - 86 ppm: involved in crystallinity
Signal of 86 ppm - 80 ppm: involved in non-crystallinity

Still another aspect of the cellulose formed body includes a natural cellulose fiber that includes a cellulose microfiber having a fiber width of 1 nm or greater and 1 μm or less, in which a first degree of crystallinity obtained from Equation (4) in infrared absorption spectra measured by a Fourier transform infrared spectrometer is 0 or greater and 1 or less.

[Equation sequence number 4]

$$\text{First degree of crystallinity (Cr.R.}_1\text{; the ratio of crystallinity 1)} = A_{1372}/A_{2900} \quad (4)$$

$A_{1372}$: Spectral intensity at wavelength of 1372 ($cm^{-1}$)
$A_{2900}$: Spectral intensity at wavelength of 2900 ($cm^{-1}$)

Still another aspect of the cellulose formed body includes a natural cellulose fiber that includes a cellulose microfiber having a fiber width of 1 nm or greater and 1 μm or less, in which a second degree of crystallinity obtained from Equation (5) in infrared absorption spectra measured by a Fourier transform infrared spectrometer is 0 or greater and 0.5 or less.
[Equation sequence number 5]

$$\text{Second degree of crystallinity (Cr.R.}_2\text{; the ratio of crystallinity 2)} = A_{1430}/A_{893} \quad (5)$$

$A_{1430}$: Spectral intensity at wavelength of 1430($cm^{-1}$)
$A_{893}$: Spectral intensity at wavelength of 893 ($cm^{-1}$)

Still another aspect of the cellulose formed body includes a natural cellulose fiber that includes a cellulose microfiber having a fiber width of 1 nm or greater and 1 μm or less, in which the cellulose formed body has a maximum water content of 0% by mass or greater and 5% by mass or less.
Still another aspect of the cellulose formed body includes a natural cellulose fiber that includes a cellulose microfiber having a fiber width of 1 nm or greater and 1 μm or less, in which an oxygen permeability over a measurement time of 200 hours, which is measured by an oxygen permeability measuring device (coulometric method), is 0.3 $cc/m^2$/day or greater and 7.0 $cc/m^2$/day or less in terms of a thickness of 25 μm.

Effect

It is possible to reduce a burden required for producing a cellulose formed body.

Brief Description of Drawings

FIG. 1 is a graph showing an X-ray diffraction pattern of a cellulose formed body measured by an X-ray diffractometer, to which an element for describing a degree of crystallinity of the cellulose formed body calculated by a Segal method is added.
FIG. 2 is a graph showing an X-ray diffraction pattern of a cellulose formed body measured by an X-ray diffractometer, to which an element for describing a degree of crystallinity of the cellulose formed body calculated by a curve fitting method is added.
FIG. 3 is a graph showing a spectrum of a cellulose formed body (Example 1) measured by a nuclear magnetic resonance device.
FIG. 4 is a graph showing a spectrum of a cellulose formed body (Example 2) measured by a nuclear magnetic resonance device.
FIG. 5 is a graph showing a spectrum of a cellulose formed body (Example 3) measured by a nuclear magnetic resonance device.
FIG. 6 is a graph showing a first degree of crystallinity in infrared absorption spectra of the cellulose formed bodies (Examples 1 to 3) measured by a Fourier transform infrared spectrometer.
FIG. 7 is a graph showing a second degree of crystallinity in infrared absorption spectra of the cellulose formed bodies (Examples 1 to 3) measured by a Fourier transform infrared spectrometer.
FIG. 8 is a schematic view showing an electron micrograph of a cellulose formed body (Example 1).
FIG. 9 is a schematic view showing an electron micrograph of a cellulose formed body (Example 2).
FIG. 10 is a schematic view showing an electron micrograph of a cellulose formed body (Example 3).
FIG. 11 is a graph showing an X-ray diffraction pattern of a cellulose formed body measured by an X-ray diffractometer (radiation source CuKα).

Description of Embodiments

Embodiments will be described with reference to the accompanying drawings according to the following items.

1. Method for producing cellulose formed body

    A. First embodiment

        (1) Step of generating aqueous dispersion

            (a) Raw materials
            (b) Fiber width
            (c) Fiber structure
            (d) Additive

                (Wet paper strength enhancer)
                (Sizing agent)
                (Reinforcing material)

        (2) Dehydration step
        (3) Drying step

    B. Second embodiment

        (1) Step of generating aqueous dispersion
        (2) Step of applying aqueous dispersion
        (3) Drying step

2. Cellulose formed body

    (1) Index of amorphization

        (a) Degree of crystallinity calculated by Segal method
        (b) Degree of crystallinity calculated by curve fitting method
        (c) Crystallinity index
        (d) First degree of crystallinity determined from infrared absorption spectrum
        (e) Second degree of crystallinity determined from infrared absorption spectrum
        (f) Maximum water content
        (g) Electron micrograph

    (2) Other physical properties

        (a) X-ray diffraction pattern
        (b) Oxygen permeability
        (c) Others

3. Actions and effects

1. Method for producing cellulose formed body

A. First embodiment

A first embodiment of a method for producing a cellulose formed body will be described.

The method for producing a cellulose formed body according to the present embodiment includes three steps. The first step is a step of generating an aqueous dispersion containing natural cellulose fibers. The second step is a dehydration step of press-forming the aqueous dispersion while dehydrating the aqueous dispersion to generate a dehydrated body. The third step is a drying step of drying the dehydrated body.

(1) Step of generating aqueous dispersion

In this step, an aqueous dispersion having a concentration of greater than 0% and 10% or less, which contains at least one of a natural cellulose fiber having a fiber width of greater than 1 μm and a cellulose microfiber having a fiber width of 1 μm or less, is generated.

(a) Raw materials

In the present embodiment, the natural cellulose fiber is used as the raw material. The kind of the natural cellulose fiber is not particularly limited, but is preferably plant-based pulp such as cotton or wood. As the plant-based pulp, for example, various kinds of wood-derived kraft pulp, sulfite pulp (SP), recycled pulp, mechanical pulp, powdery cellulose, microcrystalline cellulose powder, nanocellulose, cellulose nanocrystals, or the like can be used.

Examples of the various kinds of wood-derived kraft pulp include non-wood pulp such as kenaf, hemp, rice, bagasse, bamboo, or cotton, leaf bleached kraft pulp (LBKP), unbleached kraft pulp from hardwood (LUKP), needle bleached kraft pulp (NBKP), and needle unbleached kraft pulp (NUKP).

Examples of the recycled pulp include deinked pulp (DIP).

Examples of the mechanical pulp include ground pulp (GP), pressure ground wood pulp (PGW), refiner mechanical pulp (RMP), thermomechanical pulp (TMP), chemi-thermomechanical pulp (CTMP), and chemi-mechanical pulp (CMP) or chemi-ground pulp (CGP).

The powdery cellulose is obtained by pulverizing kraft pulp, sulfite pulp (SP), recycled pulp, mechanical pulp, or the like derived from various woods with a high-pressure homogenizer, a mill, or the like.

The microcrystalline cellulose powder is obtained by purifying kraft pulp, sulfite pulp (SP), recycled pulp, mechanical pulp, or powdery cellulose derived from various woods by a chemical treatment such as acid hydrolysis.

Among these plant-based pulps, it is preferable to use NBKP which is wood pulp.

The cellulose formed body of the present embodiment is solid matter obtained by physically entangling and aggregating an aqueous dispersion containing natural cellulose fibers. The proportion of the natural cellulose fibers in all the fibers, which are aggregates of the natural cellulose fibers, is preferably 100% by mass.

(b) Fiber width

The natural cellulose fibers contained in the aqueous dispersion are not limited as long as the natural cellulose fibers include at least one of natural cellulose fibers having a fiber width of greater than 1 μm and 100 μm or less and cellulose microfibers having a fiber width of 1 nm or greater and 1 μm or less. For example, the natural cellulose fibers have four kinds of forms A to D.

The form A is natural cellulose fibers in which cellulose microfibers that have been defibrated are branched from the surface of the natural cellulose fibers having a fiber width of greater than 1 μm. The cellulose microfibers are defibrated but are not separated from the surface of the natural cellulose fibers having a fiber width of greater than 1 μm, and are branched from the surface of the natural cellulose fibers.

In order to generate the natural cellulose fibers in the form A, the cellulose microfibers are defibrated and branched from the natural cellulose fibers having a fiber width of greater than 1 μm.

The form B is natural cellulose fibers in which the cellulose microfibers that have been defibrated are branched from the surface of the natural cellulose fibers having a fiber width of 1 μm or less. The cellulose microfibers are defibrated but are not separated from the surface of the natural cellulose fibers having a fiber width of 1 μm or less, and are branched from the surface of the natural cellulose fibers.

In order to generate the natural cellulose fibers in the form B, the natural cellulose fibers are defibrated to generate natural cellulose fibers having a fiber width of 1 μm or less. Further, the cellulose microfibers are defibrated and branched from the generated natural cellulose fibers having a fiber width of 1 μm or less.

The form C is a mixture of natural cellulose fibers that have been defibrated to a fiber width of 1 μm or less and cellulose microfibers that have been completely defibrated until the shaft disappears.

In order to generate the natural cellulose fiber in the form C, the natural cellulose fibers are defibrated to generate cellulose microfibers having a fiber width of 1 μm or less. In addition, the cellulose microfibers are defibrated until the shaft disappears. A mixture in which both kinds of natural cellulose fibers are mixed is generated by mixing the natural cellulose fibers defibrated to a fiber width of 1 μm or less as described above with the cellulose microfibers that have been completely defibrated until the shaft disappears.

The form D is cellulose microfibers that have been completely defibrated until the shaft disappears.

In order to generate natural cellulose fibers in the form D, cellulose microfibers are generated by being defibrated from natural cellulose fibers, and the cellulose microfibers are defibrated until the shaft disappears.

(c) Fiber structure

Natural cellulose fibers such as wood and cotton have a hierarchical structure and are mainly composed of a thin primary wall and a thick secondary wall. The secondary wall has three layers of an S1 layer, an S2 layer, and an S3 layer, and each of the three layers constitutes fine fibers called cellulose microfibrils. The cellulose microfibril is a fiber in the smallest unit constituting the cellulose fiber, and it is considered that the fiber is in a state where the fiber cannot be further thinned. The fiber width of the cellulose microfibril is, for example, 100 nm or less.

The cellulose microfibrils are aligned in a direction orthogonal to the axis of the cellulose fiber (S1 layer), a direction parallel to the axis thereof (S2 layer), and a direction orthogonal to the axis thereof (S3 layer). The primary wall and the secondary wall S1 layer are not thick layers, but are aligned in a direction orthogonal to the axis of the cellulose fibers, and thus the primary wall and the secondary wall S1 layer are in a state where the inside thereof is bound by the secondary wall S2 layer having the largest thickness. As a result, the secondary wall S2 layer is difficult to fibrillate.

It is considered that the natural cellulose fibers in which defibrated cellulose microfibrils are branched are formed in a manner that the primary wall and the S1 layer in the secondary wall of the natural cellulose fibers are defibrated, and it is presumed that the cellulose microfibrils leave the S2 layer having the largest thickness disposed in parallel with the axis of the cellulose fibers.

The tensile strength of one cellulose microfibril is said to be 5 times or greater the tensile strength of iron. It can be said that the S2 layer disposed in parallel with the fiber axis is a fiber having extremely high strength.

The details of the cellulose formed body of the present embodiment will be described below, but the cellulose formed body is amorphized. It is presumed that the amorphization is most likely to occur in the cellulose microfibers that have been defibrated to have a fiber width of 1 μm or less. The reason for this is that when the fiber width is greater than 1 μm, this indicates that the cellulose fibers are not sufficiently defibrated, and in this case, there is a possibility that the amorphization of the cellulose fibers or the cellulose molecule does not sufficiently occur. This point is verified by experimental results shown in [Examples] described below.

(d) Additive

(Wet paper strength enhancer)

In order to enhance the physical strength of the cellulose formed body, a wet paper strength enhancer can be added to the aqueous dispersion. For example, a urea formaldehyde resin, a melamine formaldehyde resin, polyamide polyamine epichlorohydrin, polyvinylamine, or the like can be used as the wet paper strength enhancer.

(Sizing agent)

In order to enhance the water resistance of the cellulose formed body, a sizing agent can be added to the aqueous dispersion. For example, rosin soap, an alkyl ketene dimer, alkenyl succinic anhydride, polyvinyl alcohol, oxidized starch, a styrene-acrylic copolymer, a styrene-methacrylic copolymer, or the like can be used as the sizing agent.

(Reinforcing material)

In order to enhance the physical strength of the cellulose formed body, for example, a glass fiber or a plastic fiber such as polypropylene can be added to the aqueous dispersion. The obtained cellulose formed body having physical strength can be applied to various fields where strength is required, by utilizing the strength.

(2) Dehydration step

In this step, the aqueous dispersion generated in the step of generating an aqueous dispersion, which is the previous step, is press-formed while being dehydrated to generate a dehydrated body. The press forming is so-called dehydration press forming.

The press forming is performed by applying a pressurizing force with a pressing pressure of less than 30 kgf/cm$^2$, that is, a pressurizing force with a pressing pressure of greater than 0 kgf/cm$^2$ and 30 kgf/cm$^2$ or less to the aqueous dispersion. The pressurizing force may be a value as close to 0 kgf/cm$^2$ as possible.

The dehydration press is performed to generate a dehydrated body having a moisture content of 0 times or greater and 10 times or less the weight of cellulose. The time of the dehydration press forming depends on the amount of the aqueous dispersion containing the natural cellulose fibers. For example, when 1 to 2 L of a 1% to 2% cellulose aqueous dispersion is used, the time is preferably within 0.2 to 0.5 hours and more preferably within 0.2 hours.

The form of the aggregate of the natural cellulose fibers subjected to the dehydration press forming in the

dehydration step is not particularly limited. The form of the aggregate can be set according to the form of the cellulose formed body to be obtained, for example, a block shape. When the form of the target cellulose formed body is set as any three-dimensional shape, a cellulose formed body having a shape such as a container that is formed can also be obtained.

(3) Drying step

In this step, the dehydrated body generated in the dehydration step, which is the previous step, is dried at a temperature of 100°C or higher and 150°C or lower. In this case, a pressurizing force with a pressing pressure of less than 10 MPa, that is, a pressurizing force with a pressing pressure of greater than 0 MPa and 10 MPa or less is applied to the dehydrated body. The pressurizing force may be a value as close to 0 MPa as possible. The drying step is a step of drying and forming the dehydrated body with a hot press after the dehydration press forming of the aqueous dispersion.
The time for drying and forming the dehydrated body using a hot press depends on the amount of the cellulose aqueous dispersion. For example, when 1 to 2 L of a 1% to 2% cellulose aqueous dispersion is used, the time is preferably within 0.5 to 1 hour and more preferably within 0.5 hours.
The moisture content of the cellulose formed body completed by the drying step is preferably 5% by mass or less and more preferably 3% by mass or less. The moisture content of the completed cellulose formed body is 0% by mass or greater and 5% by mass or less, or 0% by mass or greater and 3% by mass or less.

B. Second embodiment

A second embodiment of the method for producing a cellulose formed body will be described. The same parts as described in the first embodiment will not be repeated.
The method for producing a cellulose formed body according to the present embodiment includes three steps. The first step is a step of generating an aqueous dispersion containing natural cellulose fibers. The second step is a step of applying the aqueous dispersion. The third step is a drying step of drying the aqueous dispersion.

(1) Step of generating aqueous dispersion

The step of generating the aqueous dispersion is the same as in the first embodiment.

(2) Step of applying aqueous dispersion

In this step, the aqueous dispersion containing the natural cellulose fibers is applied in a sheet shape. The object to be coated is not particularly limited, and may have a planar shape or a curved surface shape. However, the form of the aggregate of the natural cellulose fibers constituting the cellulose formed body is, for example, preferably a sheet-shaped winding body or a single wafer sheet. When the aggregate of the natural cellulose fibers is formed in the form of a sheet-shaped winding body, the process from drying to forming can be continuously performed, and a cellulose formed body can be efficiently produced.
The sheet-shaped winding body is realized, for example, as a continuous sheet wound around a winding core, a discontinuous sheet wound around a winding core, or a continuous sheet wound without a winding core.
The single wafer sheet is realized as a discontinuous sheet.

(3) Drying step

In this step, the aqueous dispersion generated in the step of applying the aqueous dispersion, which is the previous step, and applied in a sheet shape is dried at a temperature of 100°C or higher and 150°C or lower.
The time for applying the aqueous dispersion of the natural cellulose fibers in a sheet shape and drying the aqueous dispersion depends on the amount of the aqueous dispersion containing cellulose. For example, when a 1% to 2% aqueous dispersion is used, the time is preferably 0.1 to 0.5 hours/1 m. It is preferable that the moving speed of the feeding sheet is a constant speed. By moving the feeding sheet at a constant speed, a sheet-shaped winding body that has no difference in coating thickness in the winding direction and is uniform in the same direction can be obtained.
The moisture content of the cellulose formed body completed by the drying step is preferably 5% by mass or less and more preferably 3% by mass or less. The moisture content of the completed cellulose formed body is 0% by mass or greater and 5% by mass or less, or 0% by mass or greater and 3% by mass or less.

2. Cellulose formed body

The cellulose formed body of the present embodiment will be described. Examples 1 to 3 and Table 1, which will

be described below in the section of [Examples], will also be appropriately mentioned.

When the method for producing a cellulose formed body according to the present embodiment is carried out, a cellulose formed body can be obtained. Meanwhile, the cellulose formed body of the present embodiment is not entirely the same as the cellulose formed body obtained by performing the above-described production method. The cellulose formed body of the present embodiment is limited to a part thereof, for example, those specified as Examples 2 and 3 described in the section of [Examples]. The cellulose formed body of Example 1 is not the cellulose formed body of the present embodiment.

A clear definition of the cellulose formed body of the present embodiment is that the natural cellulose fibers are amorphized. The amorphization is affected by the form of the natural cellulose fibers. The natural cellulose fibers constituting the cellulose formed body of the present embodiment mainly include cellulose microfibers having a fiber width of 1 μm or less, and are, for example, one of the forms B to D.

(1) Index of amorphization

In regard to the amorphization of the natural cellulose fibers, in the present embodiment, the conditions for the amorphization, that is, a multifaceted approach to clarify the indices of the amorphization is made. The following seven elements are employed as the determination indices for the amorphization in the present embodiment.

· Degree of crystallinity calculated by Segal method · Degree of crystallinity calculated by curve fitting method · Crystallinity index
· First degree of crystallinity determined from infrared absorption spectrum
· Second degree of crystallinity determined from infrared absorption spectrum
· Oxygen permeability
· Maximum water content

(a) Degree of crystallinity calculated by Segal method

In the cellulose formed body of the present embodiment, the degree of crystallinity of the natural cellulose fibers obtained from Equation (1) is set to 0% or greater and 80% or less.

[Equation sequence number 6]

$$\text{Degree of crystallinity (\%)} = (1 - I_{am}/I_{200}) \times 100 \qquad (1)$$

I: Each diffraction intensity measured by X-ray diffraction method
$I_{am}$: Diffraction intensity of amorphous portion (2θ = 18.5°)
$I_{200}$: Diffraction intensity of crystal lattice plane (200 plane, peak around 2θ=22.6) characteristic of cellulose I type in natural cellulose

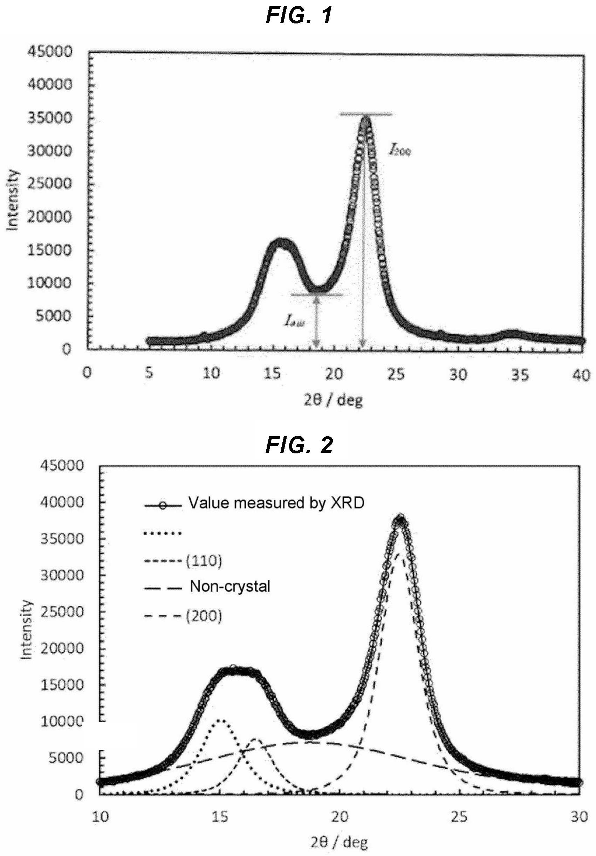

FIG. 1 is a graph showing an X-ray diffraction pattern of a cellulose formed body measured by an X-ray diffractometer (XRD device), to which an element for describing the degree of crystallinity of the cellulose formed body calculated by a Segal method is added. This graph shows the results of measurement in which a sample of cellulose equivalent to that of the present embodiment is placed on a non-reflective silicon sample plate in a stationary state and a measurement is performed in a measurement range of 5° to 90° using an X-ray diffractometer.

Cellulose is a crystalline polymer, and the strength properties thereof vary depending on the crystal type. Natural cellulose has an I-type crystal structure, and a maximum value $I_{200}$ of a (200) plane appears near 22.6°. The degree of crystallinity is defined by a ratio of a value of a difference between a diffraction intensity $I_{200}$ of an I-type crystal lattice plane and a diffraction intensity $I_{am}$ of an amorphous portion appearing at a position of 18.5° to the diffraction intensity $I_{200}$ of the I-type crystal lattice plane.

Therefore, as the diffraction intensity $I_{am}$ of the amorphous portion increases and the difference between the diffraction intensity $I_{200}$ of the I-type crystal lattice plane and the diffraction intensity $I_{am}$ of the amorphous portion decreases, the value of the degree of crystallinity decreases, and the amorphization proceeds. The degree of crystallinity of the natural cellulose fibers when the amorphization is completely made is 0%.

In the present embodiment, the index in the Segal method for determining that the natural cellulose constituting the cellulose formed body is amorphized is set to a degree of crystallinity of 80%. That is, the cellulose formed body of the present embodiment has a degree of crystallinity of 0% or greater and 80% or less as a value calculated by the Segal method.

When Examples 1 to 3 are described as examples, as listed in Table 1, both the cellulose formed body of Example

2 (degree of crystallinity of 79.1%) which is generated from the natural cellulose fibers in the form C and the cellulose formed body of Example 3 (degree of crystallinity of 74.4%) which is generated from the natural cellulose fibers in the form D have a degree of crystallinity of 80% or less, which correspond to the cellulose formed body of the present embodiment. The cellulose formed body of Example 1, which is generated by the natural cellulose fibers in the form A, has a degree of crystallinity of 80.4%, and thus is not the cellulose formed body of the present embodiment.

From the above-described viewpoint, it can be said that the cellulose formed body of the present embodiment is produced by the above-described method for producing a cellulose formed body, containing cellulose microfibers having a fiber width of 1 μm or less, which are obtained by defibrating natural cellulose fibers, as a main component.

(b) Degree of crystallinity calculated by curve fitting method

In the cellulose formed body of the present embodiment, the degree of crystallinity of the natural cellulose fibers obtained from Equation (2) is set to 0% or greater and 55% or less.
[Equation sequence number 7]

$$\text{Degree of crystallinity (\%)} = \{(\text{Area crystal})/(\text{Area crystal} + \text{Area non-crystal})\} \times 100 \quad (2)$$

Area crystal: area under curve obtained by integrating each crystal curve when X-ray diffraction graph, which is composite of plurality of graphs,
is separated into plurality of single curves using peak division in curve fitting method
Area non-crystal: area under curve obtained by integrating non-crystal curve obtained in the same manner as that for Area crystal

FIG. 2 is a graph showing an X-ray diffraction pattern of a cellulose formed body measured by an X-ray diffractometer (XRD device), to which an element for describing the degree of crystallinity of the cellulose formed body calculated by a curve fitting method is added. This graph shows the results of measurement in which a sample of cellulose equivalent to that of the present embodiment is placed on a non-reflective silicon sample plate in a stationary state and a measurement is performed in a measurement range of 5° to 90° using an X-ray diffractometer.

The Area crystal and the Area non-crystal are as shown in the annotations included in Equation (2). As can be seen from Equation (2), as the value of the Area non-crystal increases, the value of the degree of crystallinity decreases, and the amorphization proceeds. The degree of crystallinity of the natural cellulose fibers when the amorphization is completely made is 0%.

In the present embodiment, the index in the curve fitting method for determining that the natural cellulose constituting the cellulose formed body is amorphized is set to a degree of crystallinity of 55%. That is, the cellulose formed body of the present embodiment has a degree of crystallinity of 0% or greater and 55% or less as a value calculated by the curve fitting method.

When Examples 1 to 3 are described as examples, as listed in Table 1, both the cellulose formed body of Example 2 (degree of crystallinity of 54.1%) which is generated from the natural cellulose fibers in the form C and the cellulose formed body of Example 3 (degree of crystallinity of 47.5%) which is generated from the natural cellulose fibers in the form D have a degree of crystallinity of 55% or less, which correspond to the cellulose formed body of the present embodiment. The cellulose formed body of Example 1, which is generated by the natural cellulose fibers in the form A, has a degree of crystallinity of 55.3%, and thus is not the cellulose formed body of the present embodiment.

From the above-described viewpoint, it can be said that the cellulose formed body of the present embodiment is produced by the above-described method for producing a cellulose formed body, containing cellulose microfibers having a fiber width of 1 μm or less, which are obtained by defibrating natural cellulose fibers, as a main component.

(c) Crystallinity index

In the cellulose formed body of the present embodiment, the crystallinity index obtained from Equation (3) is set to 0% or greater and 48% or less by using an integral value of a signal obtained from a nuclear magnetic resonance device.
[Equation sequence number 8]

$$\text{Crystallinity index} = (\text{signal integral value of 93 ppm - 86 ppm})/\{(\text{signal integral value of 93 ppm - 86 ppm}) + (\text{signal integral value of 86 ppm - 80 ppm})\} \times 100 \quad (3)$$

Signal of 93 ppm - 86 ppm: involved in crystallinity
Signal of 86 ppm - 80 ppm: involved in non-crystallinity

In the present embodiment, a sample of cellulose equivalent to that of the present embodiment, which is cut into, for example, 0.5 to 1 mm square, is measured using a nuclear magnetic resonance device. The details of the experiment will be described in the section of [Examples].

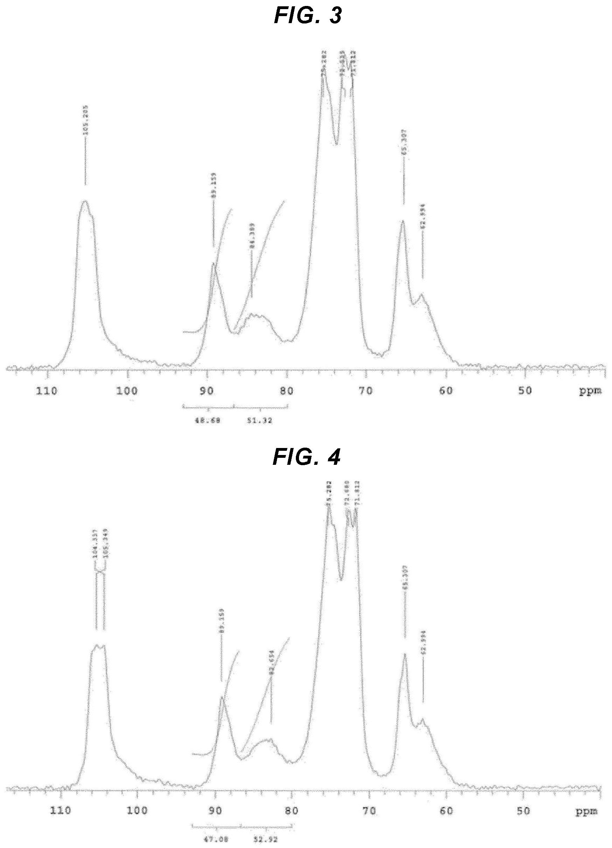

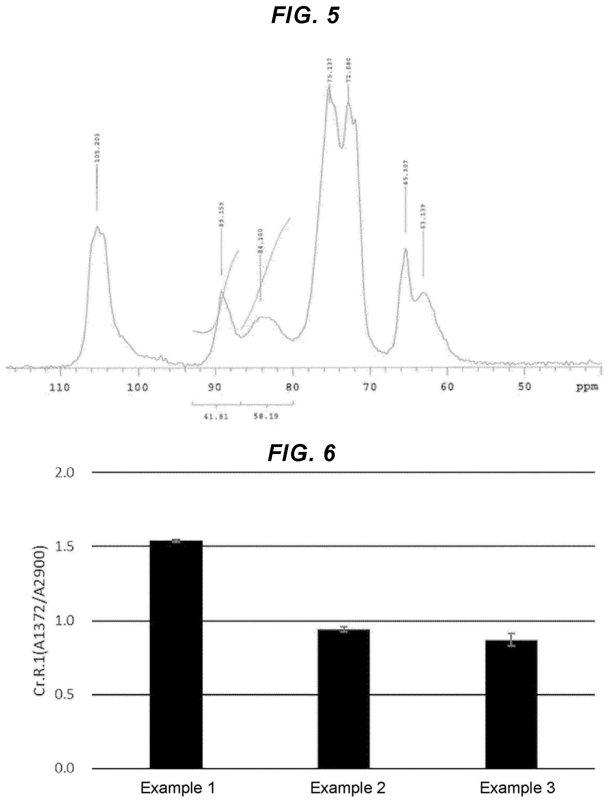

FIGS. 3 to 5 are graphs showing spectra of the cellulose formed body, which are measured by a nuclear magnetic resonance device. In Examples 1 to 3, FIG. 3 is a graph of Example 1, FIG. 4 is a graph of Example 2, and FIG. 5 is a graph of Example 3.

As listed in Table 1, the crystallinity index of Example 1 which is obtained by substituting the value of the spectrum shown in the graph of FIG. 3 into Equation (3) is 48.7. The crystallinity index of Example 2 which is obtained by substituting the value of the spectrum shown in the graph of FIG. 4 into Equation (3) is 47.1. Further, the crystallinity index of Example 3 which is obtained by substituting the value of the spectrum shown in the graph of FIG. 5 into Equation (3) is 41.8.

In regard to the crystallinity index, as shown in the annotations in Equation (3), a signal of 93 ppm to 86 ppm is involved in crystallinity, and a signal of 86 ppm to 80 ppm is involved in non-crystallinity. As can be seen from Equation (3), as the value of the Area non-crystal increases, the value of the crystallinity index decreases, and the amorphization proceeds. The crystallinity index of the natural cellulose fibers when the amorphization is completely made is 0%.

In the present embodiment, the index of the crystallinity index for determining that the natural cellulose constituting the cellulose formed body is amorphous is set to 48%. That is, the cellulose formed body of the present embodiment has a crystallinity index of 0% or greater and 48% or less.

When Examples 1 to 3 are described as examples, as listed in Table 1, both the cellulose formed body of Example 2 (crystallinity index of 47.1%) which is generated from the natural cellulose fibers in the form C and the cellulose formed body of Example 3 (crystallinity index of 41.8%) which is generated from the natural cellulose fibers in the form D have a crystallinity index of 48% or less, which correspond to the cellulose formed body of the present embodiment. The cellulose formed body of Example 1, which is generated by the natural cellulose fibers in the form A, has a crystallinity index of 48.7%, and thus is not the cellulose formed body of the present embodiment.

From the above-described viewpoint, it can be said that the cellulose formed body of the present embodiment is produced by the above-described method for producing a cellulose formed body, containing cellulose microfibers having a fiber width of 1 μm or less, which are obtained by defibrating natural cellulose fibers, as a main component.

(d) First degree of crystallinity determined from infrared absorption spectrum

In the cellulose formed body of the present embodiment, a first degree of crystallinity obtained from Equation (4) in infrared absorption spectra measured by a Fourier transform infrared spectrometer is set to 0 or greater and 1 or less. [Equation sequence number 9]

$$\text{First degree of crystallinity (Cr.R.}_1\text{; the ratio of crystallinity 1)} = A_{1372}/A_{2900} \qquad (4)$$

$A_{1372}$: Spectral intensity at wavelength of 1372 ($cm^{-1}$)
$A_{2900}$: Spectral intensity at wavelength of 2900 ($cm^{-1}$)

In the present embodiment, a sample of cellulose equivalent to that in the present embodiment is measured using a Fourier transform infrared spectrometer. More detailed information will be described in the section of [Examples].

FIG. 6 is a graph showing a first degree of crystallinity in infrared absorption spectra of the cellulose formed bodies (Examples 1 to 3) measured by a Fourier transform infrared spectrometer. As shown in FIG. 6 and Table 1, the first degree of crystallinity determined by Equation (4) in Example 1 is 1.54, the first degree thereof in Example 2 is 0.94, and the first degree thereof in Example 3 is 0.87.

In the present embodiment, the index of the first degree of crystallinity for determining that the natural cellulose constituting the cellulose formed body is amorphized is set to 1. That is, the cellulose formed body of the present embodiment has a first degree of crystallinity of 1 or less.

When Examples 1 to 3 are described as examples, as listed in Table 1, both the cellulose formed body of Example 2 (first degree of crystallinity of 0.94) which is generated from the natural cellulose fibers in the form C and the cellulose formed body of Example 3 (first degree of crystallinity of 0.87) which is generated from the natural cellulose fibers in the form D have a first degree of crystallinity of 1 or less, which correspond to the cellulose formed body of the present embodiment. The cellulose formed body of Example 1, which is generated by the natural cellulose fibers in the form A, has a first degree of crystallinity of 1.54, and thus is not the cellulose formed body of the present embodiment.

From the above-described viewpoint, it can be said that the cellulose formed body of the present embodiment is

produced by the above-described method for producing a cellulose formed body, containing cellulose microfibers having a fiber width of 1 μm or less, which are obtained by defibrating natural cellulose fibers, as a main component.

(e) Second degree of crystallinity determined from infrared absorption spectrum

In the cellulose formed body of the present embodiment, a second degree of crystallinity obtained from Equation (5) in infrared absorption spectra measured by a Fourier transform infrared spectrometer is set to 0 or greater and 0.5 or less.
[Equation sequence number 10]

$$\text{Second degree of crystallinity (Cr.R.}_2\text{; the ratio of crystallinity 2)} = A_{1430}/A_{893} \quad (5)$$

$A_{1430}$: Spectral intensity at wavelength of 1430($cm^{-1}$)
$A_{893}$: Spectral intensity at wavelength of 893 ($cm^{-1}$)

In the present embodiment, a sample of cellulose equivalent to that in the present embodiment is measured using a Fourier transform infrared spectrometer. More detailed information will be described in the section of [Examples].

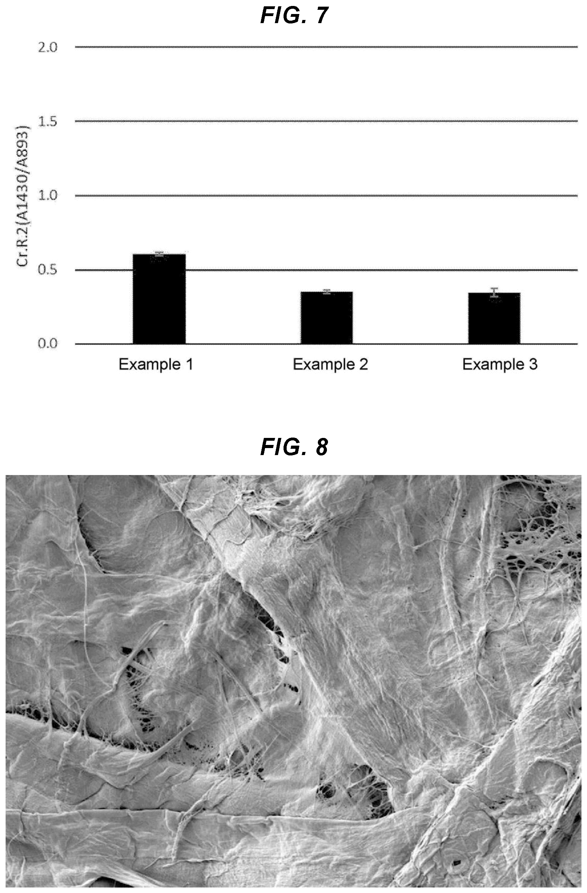

FIG. 7 is a graph showing a second degree of crystallinity in infrared absorption spectra of the cellulose formed bodies (Examples 1 to 3) measured by a Fourier transform infrared spectrometer. As shown in FIG. 7 and Table 1, the second degree of crystallinity determined by Equation (5) in Example 1 is 0.61, the second degree thereof in Example 2 is 0.35, and the second degree thereof in Example 3 is 0.36.
In the present embodiment, the index of the second degree of crystallinity for determining that the natural cellulose constituting the cellulose formed body is amorphized is set to 0.5. That is, the cellulose formed body of the present embodiment has a second degree of crystallinity of 0.5 or less.
When Examples 1 to 3 are described as examples, as listed in Table 1, both the cellulose formed body of Example 2 (second degree of crystallinity of 0.35) which is generated from the natural cellulose fibers in the form C and the cellulose formed body of Example 3 (second degree of crystallinity of 0.36) which is generated from the natural cellulose fibers in the form D have a second degree of crystallinity of 0.5 or less, which correspond to the cellulose formed body of the present embodiment. The cellulose formed body of Example 1, which is generated by the natural cellulose fibers in the form A, has a second degree of crystallinity of 0.61, and thus is not the cellulose formed body of the present embodiment.
From the above-described viewpoint, it can be said that the cellulose formed body of the present embodiment is produced by the above-described method for producing a cellulose formed body, containing cellulose microfibers having a fiber width of 1 μm or less, which are obtained by defibrating natural cellulose fibers, as a main component.

(f) Maximum water content

The cellulose formed body of the present embodiment has a maximum water content of 0% by mass or greater and 5% by mass or less.
The water content of the cellulose formed body is, for example, a value determined by substituting the mass before and after drying at a drying temperature of 105°C into Equation (6).
[Equation sequence number 11]

$$\text{Moisture content (mass\%)} = [(\text{mass before drying}) - (\text{mass after drying})]/(\text{mass before drying}) \times 100 \quad (6)$$

In the present embodiment, the index of the water content for determining that the natural cellulose constituting the cellulose formed body is amorphized is set to 5% by mass. That is, the cellulose formed body of the present embodiment has a water content of 5% by mass or less.
When Examples 1 to 3 are described as examples, as listed in Table 1, both the cellulose formed body of Example 2 (water content of 3.75% by mass) which is generated from the natural cellulose fibers in the form C and the cellulose formed body of Example 3 (water content of 2.36% by mass) which is generated from the natural cellulose fibers in the form D have a water content of 5% by mass or less, which correspond to the cellulose formed body of the present embodiment. The cellulose formed body of Example 1, which is generated by the natural cellulose fibers in the form A, has a water content of 6.97, and thus is not the cellulose formed body of the present embodiment.
In particular, the cellulose formed body of Example 3, which is generated by the natural cellulose fiber in the form D, maintains a low water content of 2.36. In consideration of the example of the cellulose formed body of Example 3, the

possibility of realizing the water content of 3% by mass or less is also high.

From the above-described viewpoint, it can be said that the cellulose formed body of the present embodiment is produced by the above-described method for producing a cellulose formed body, containing cellulose microfibers having a fiber width of 1 μm or less, which are obtained by defibrating natural cellulose fibers, as a main component.

(g) Electron micrograph

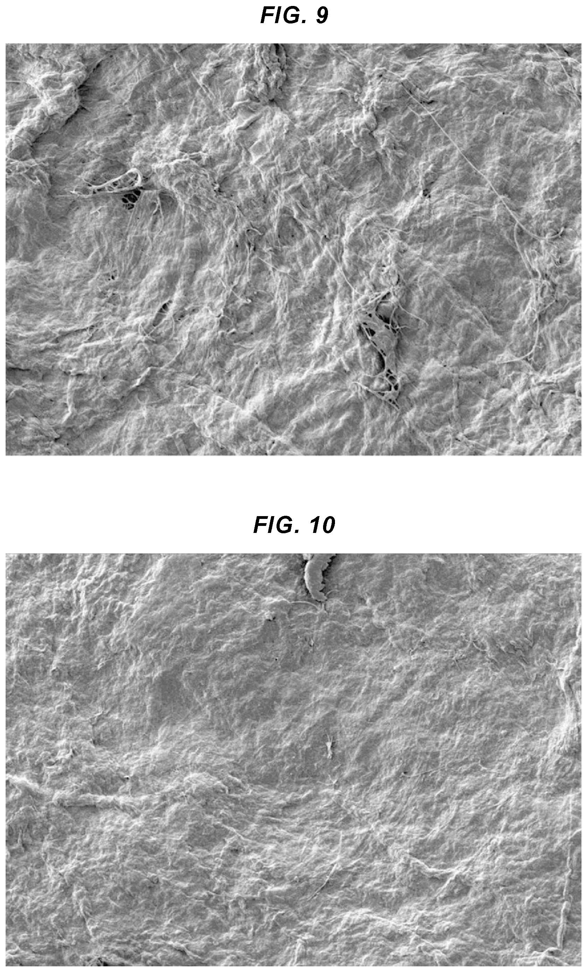

FIGS. 8 to 10 are schematic views showing electron micrographs of the cellulose formed body. In Examples 1 to 3, FIG. 8 is an electron micrograph of Example 1, FIG. 9 is an electron micrograph of Example 2, and FIG. 10 is an electron micrograph of Example 3.

The electron micrographs of FIGS. 8 to 10 shown in the form of schematic views are captured using a scanning electron microscope (SEM). The observation magnification is, for example, 1000 to 10000 times.

As shown in FIG. 8, in the cellulose formed body of Example 1, which is generated by the natural cellulose fibers in the form A, undefibrated cellulose fibers having a fiber width of 1 μm or greater, which are blended in the cellulose formed body, can be observed. The undefibrated cellulose fibers have a hierarchical structure and are mainly composed of a relatively thin primary wall and a relatively thick secondary wall.

Meanwhile, as shown in FIG. 9, in the cellulose formed body of Example 2, which is generated by the natural cellulose fibers in the form C, it can be observed that the cellulose fibers are defibrated from the primary wall to the secondary wall S3 layer and do not have a hierarchical structure. That is, it can be seen from the micrograph that the cellulose fibers are defibrated. This point is also the same for the cellulose formed body of Example 3, which is generated by the natural cellulose fibers in the form D shown in FIG. 10.

A direct answer for whether or not the natural cellulose constituting the cellulose formed body is amorphized is difficult to obtain from the electron micrograph. On the other hand, as shown in FIGS. 8 to 10, for example, whether the cellulose fiber is undefibrated or defibrated is easily distinguished based on the presence or absence of the hierarchical structure. Therefore, when at least the state where the cellulose fibers are completely defibrated can be observed from the micrograph, it can be presumed that the natural cellulose as the observation target is amorphized.

(2) Other physical properties

The cellulose formed body of the present embodiment also has the following physical properties in addition to the properties described above.

(a) X-ray diffraction pattern

The cellulose formed body of the present embodiment has a pattern having all of the following elements as an X-ray diffraction pattern measured by an X-ray diffractometer (XRD device) using CuKα as a radiation source.

One or two peaks in $13° \leq 2\theta \leq 18°$

One peak in $18° \leq 2\theta \leq 30°$
One peak in $30° \leq 2\theta \leq 40°$

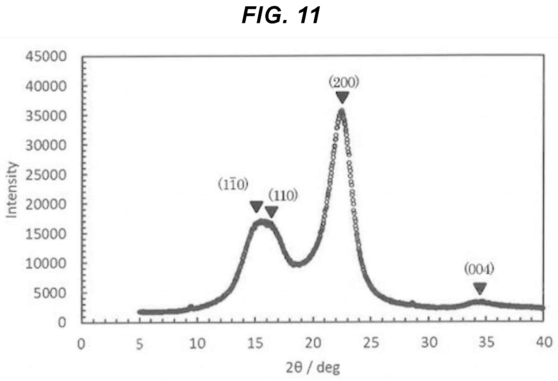

FIG. 11 is a graph showing an X-ray diffraction pattern of the cellulose formed body measured by an X-ray diffractometer (XRD device) using CuKα as a radiation source. This graph shows the results of measurement in which a sample of cellulose equivalent to that of the present embodiment is placed on a non-reflective silicon sample plate in a stationary state and a measurement is performed in a measurement range of 5° to 90° using an X-ray diffractometer.

As shown in the graph of FIG. 11, the measurement result obtained by using an X-ray diffractometer shows an X-ray diffraction pattern having all of the above-described three elements. As described above, the X-ray diffractometer used to obtain the X-ray diffraction pattern uses CuKα X-rays (wavelength $\lambda$ = 0.1542 nm) as a radiation source. When CuKα X-rays are used, the X-ray diffraction pattern of the natural cellulose has

one or two peaks in $13° \leq 2\theta \leq 18°$ and
one peak in $20° \leq 2\theta \leq 24°$.

These diffraction angles are derived from Equation (7), which is the following Bragg diffraction condition.
[Equation sequence number 12]

$$2 \cdot d \cdot \sin\theta = n \cdot \lambda \qquad (7)$$

d: Crystal spacing

n: Order of diffraction, usually 1

When the wavelength of the X-ray diffractometer changes, the diffraction angle also changes due to the change, and the diffraction angle when determining the degree of crystallinity also changes.

(b) Oxygen permeability

In the cellulose formed body of the present embodiment, the oxygen permeability over a measurement time of 200 hours, which is measured by an oxygen permeability measuring device (coulometric method), is set to 0.3 cc/m$^2$/day or greater and less than 7 cc/m$^2$/day in terms of a thickness of 25 $\mu$m.

As listed in Table 1, the oxygen permeability of the cellulose formed body is 0.66 in Example 2, and the oxygen permeability thereof in Example 3 is 0.31.

(c) Others

The density of the cellulose formed body is 1.45 g/cm$^3$ or greater and 2.00 g/cm$^3$ or less.

The tensile elastic modulus of the cellulose formed body is 6 GPa or greater and 100 GPa or less at 20°C, and 6 GPa or greater and 100 GPa or less at 90°C.

The tensile stress of the cellulose formed body is 100 MPa or greater and 10 GPa or less at 20°C, and 90 MPa or greater and 10 GPa or less at 90°C.

The bending elastic modulus of the cellulose formed body is 11 GPa or greater and 100 GPa or less at 20°C, and 8 GPa or greater and 100 GPa or less at 90°C.

The bending stress of the cellulose formed body is 80 MPa or greater and 10 GPa or less at 20°C, and 60 MPa or greater and 10 GPa or less at 90°C.

The interlayer strength of the cellulose formed body is 11 MPa or greater and 10 GPa or less.

The Izod impact strength of the cellulose formed body without a notch at 20°C is 36 kJ/m$^2$ or greater and 1,000 kJ/m$^2$ or less.

The D hardness of the cellulose formed body which is measured with a Rockwell durometer at 20°C is 80 or greater and 1000 or less.

The tensile elastic modulus after 24 hours, which is measured as evaluation of the oil resistance of the cellulose formed body, is 6 GPa or greater and 100 GPa or less.

The tensile stress after 24 hours, which is measured as evaluation of the oil resistance of the cellulose formed body, is 100 MPa or greater and 10 GPa or less.

The bending elastic modulus after 24 hours, which is measured as evaluation of the oil resistance of the cellulose formed body, is 13 GPa or greater and 100 GPa or less.

The bending stress after 24 hours, which is measured as evaluation of the oil resistance of the cellulose formed body, is 100 MPa or greater and 10 GPa or less.

3. Actions and effects

According to the method for producing a cellulose formed body of the first embodiment, the pressing pressure can be suppressed to a low pressure of 10 MPa or less (in the dehydration step) throughout all steps. Therefore, the burden required for producing a cellulose formed body can be reduced.

According to the method for producing a cellulose formed body of the second embodiment, the pressing pressure can be suppressed to an extremely low pressure of 30 kgf/cm$^2$ or less (in the step of generating the aqueous dispersion) throughout all the steps. Therefore, the burden required for producing a cellulose formed body can be further reduced.

According to the method for producing a cellulose formed body of the present embodiment, the amorphization of the natural cellulose fiber constituting the cellulose formed body can be promoted only by devising the kind of the natural cellulose fiber to be mixed with the aqueous dispersion.

In the cellulose formed body according to the present embodiment, since the natural cellulose fiber is amorphized, high oxygen barrier properties can be imparted.

Examples

1. Cellulose formed body

Three kinds of cellulose formed bodies of Examples 1 to 3 were prepared. The cellulose formed bodies were prepared by performing the following three steps using the same method as the production method according to the embodiment described above.

- Step of generating aqueous dispersion
- Dehydration step
- Drying step

(1) Example 1

(Step of generating aqueous dispersion)

Natural cellulose fibers in the form A were prepared as the natural cellulose fibers using wood pulp (needle bleached kraft pulp) as a raw material to prepare a cellulose aqueous dispersion having a concentration of 1%. The form A is natural cellulose fibers in which cellulose microfibers that have been defibrated are branched from the surface of the natural cellulose fibers having a fiber width of greater than 1 μm.

(Dehydration step)

6 L of the generated cellulose aqueous dispersion was dehydrated and pressed to obtain a dehydrated body.

(Drying step)

The dehydrated body was dried. The dehydrated body was dried under conditions of a temperature of 150°C or lower and a pressing pressure of 10 MPa or less. In this manner, a cellulose formed body of Example 1 having a structure as shown in FIG. 8 was obtained.

(2) Example 2

(Step of generating aqueous dispersion)

Natural cellulose fibers in the form C were prepared as the natural cellulose fibers using wood pulp (needle bleached kraft pulp) as a raw material to prepare a cellulose aqueous dispersion having a concentration of 1%. The form C is a mixture of natural cellulose fibers that have been defibrated to a fiber width of 1 μm or less and cellulose microfibers that have been completely defibrated until the shaft disappears.

(Dehydration step)

6 L of the generated cellulose aqueous dispersion was dehydrated and pressed to obtain a dehydrated body.

(Drying step)

The dehydrated body was dried. The dehydrated body was dried under conditions of a temperature of 150°C or lower and a pressing pressure of 10 MPa or less. In this manner, a cellulose formed body of Example 2 having a structure as shown in FIG. 9 was obtained.

(3) Example 3

(Step of generating aqueous dispersion)

Natural cellulose fibers in the form D were prepared as the natural cellulose fibers using wood pulp (needle bleached kraft pulp) as a raw material to prepare a cellulose aqueous dispersion having a concentration of 1%. The form D is cellulose microfibers that have been completely defibrated until the shaft disappears.

(Dehydration step)

6 L of the generated cellulose aqueous dispersion was dehydrated and pressed to obtain a dehydrated body.

(Drying step)

The dehydrated body was dried. The dehydrated body was dried under conditions of a temperature of 150°C or lower and a pressing pressure of 10 MPa or less. In this manner, a cellulose formed body of Example 3 having a structure as shown in FIG. 10 was obtained.

2. Evaluation of physical properties

The evaluation results of the physical properties of Examples 1 to 3 are listed in Table 1.

[Table 1]

| Physical properties (unit) | Example 1 | Example 2 | Example 3 |
|---|---|---|---|
| Degree of crystallinity (%, Segal method, XRD) | 80.4 | 79.1 | 74.4 |
| Degree of crystallinity (%, curve fitting method, XRD) | 55.3 | 54.1 | 47.5 |
| Crystallinity index (%, NMR) | 48.7 | 47.1 | 41.8 |
| First degree of crystallinity (FTIR) | 1.54 | 0.94 | 0.87 |
| Second degree of crystallinity (FTIR) | 0.61 | 0.35 | 0.34 |
| Density (g/cm$^3$) | 0.98 | 1.46 | 1.49 |
| Water content (%) | 6.97 | 3.75 | 2.36 |
| MOCON oxygen permeability (in terms of thickness of 25μm) (cc/m$^2$/day) | | 0.66 | 0.31 |
| Izod impact strength (without notch) (kJ/m$^2$) | 19.6 | 37.1 | 36.6 |
| Hardness (D hardness) | D65.3 | D81.8 | D84.5 |
| Tensile elastic modulus (GPa) | 2.5/20°C | 5.8/20°C | 6.1/20°C |
| | 2.6/90°C | 3.8/90°C | 6.3/90°C |
| Tensile stress (MPa) | 43.9/20°C | 105.7/20°C | 105.8/20°C |
| | 57/90°C | 88/90°C | 92/90°C |
| Bending elastic modulus (GPa) | 4.7/20°C | 10.8/20°C | 11.2/20°C |
| | 2.8/90°C | 8.2/90°C | 8.4/90°C |
| Bending stress (MPa) | 36/20°C | 85/20°C | 87/20°C |
| | 26/90°C | 59/90°C | 61/90°C |
| Interlayer strength (MPa) | 1.0 | 5.6 | 11.5 |
| Water resistance: tensile elastic modulus (24 hours) (GPa) | 0.02 | 0.2 | 0.4 |
| Water resistance: tensile stress (24 hours) (MPa) | 1.9 | 10.4 | 11.3 |
| Water resistance: bending elastic modulus (24 hours) (GPa) | 0.1 | 0.2 | 1.5 |
| Water resistance: bending stress (24 hours) (MPa) | 1 | 3 | 12 |
| Oil resistance: tensile elastic modulus (24 hours) (GPa) | 2.7 | 5.9 | 6.6 |
| Oil resistance: tensile stress (24 hours) (MPa) | 37.5 | 119.8 | 101.0 |
| Oil resistance: bending elastic modulus (24 hours) (GPa) | 4.6 | 13.0 | 13.6 |
| Oil resistance: bending stress (24 hours) (MPa) | 43 | 123 | 118 |

(1) Analysis device

The analyses of Examples 1 to 3 were performed using the following devices.

(X-ray diffraction)

A SmartLab (manufactured by Rigaku Corporation) was used as an X-ray diffractometer (XRD device). $CuK\alpha$ was used as a radiation source, and an optical system had an optical system multilayer film mirror.

The measurement was performed by setting the tube voltage to 45 kV, the tube current to 200 mA, and the measurement range to 5 to 90 deg, and placing the sample on a silicon non-reflective sample plate in a stationary state.

(Nuclear magnetic resonance device)

A Varian VNMR S-400 (manufactured by Varian, Inc.) was used as a nuclear magnetic resonance device.

The observation nucleus $^{13}C$ was measured (under conditions of 100.5 MHz, contact time of 2 ms, waiting time of 3 s, number of times of integration of 4096 times, and rotation frequency of 7 kHz). The sample was cut into 0.5 to 1 mm square and used.

(Fourier transform infrared spectrometer)

As the Fourier transform infrared spectrometer, Nicolet (registered trademark of Thermo Electron Scientific Instruments Limited Liability Company) iS20 FTIR Spectrometer (manufactured by Thermo Fisher Scientific, Inc.) was used.

The formed body was cut into an appropriate size and used.

(Scanning electron microscope)

JSM 7500F (FE-SEM, manufactured by JEOL Ltd.) was used as a high-resolution scanning electron microscope.

The observation was performed at an acceleration voltage of 3.0 kV. The formed body was cut to an appropriate size before observation and subjected to osmium plasma coating. It was observed that the cellulose fiber width was reduced in order of Example 1 (see FIG. 8), Example 2 (see FIG. 9), and Example 3 (see FIG. 10) and the surface was smoothed.

(2) Analysis items

(Density)

In order to obtain the density, the cellulose formed body was cut into a size of 150 mm in length and 15 mm in width to obtain a sample. The density was calculated by measuring the thickness and the weight of the sample and dividing the weight (g) by the volume ($cm^3$) of the sample.

(Water content)

The water content was determined by substituting the mass before and after drying at 105°C into Equation (6). [Equation sequence number 13]

$$\text{Moisture content (mass\%)} = [(\text{mass before drying}) - (\text{mass after drying})]/(\text{mass before drying}) \times 100 \qquad (6)$$

(MOCON oxygen permeability)

The oxygen permeability ($cc/m^2/day$) was determined using an oxygen permeability measuring device. The oxygen permeability was evaluated in terms of a thickness of 25 $\mu m$ using an OX-TRAN (registered trademark) 2/22 10x (manufactured by MOCON, Inc.) as an oxygen permeability measuring device.

(Izod impact strength)

The measurement was performed using an Izod impact tester. MODEL IM-1110 (manufactured by Ueshima Seisakusho Co., Ltd.) was used as an Izod impact tester. The test piece was set to a size of 80 mm in length, 10 mm in width, and 4 mm in thickness.

(Hardness)

The measurement was performed using an Asker rubber hardness tester. A D-type Asker rubber hardness tester (manufactured by KOBUNSHI KEIKI CO., LTD.) was used. The test piece was set to a size of 50 mm in length, 50 mm in width, and 6 mm in thickness.

(Tensile elastic modulus and tensile stress)

The tensile elastic modulus and the tensile stress were measured using a universal testing machine. An AUTOGRAPH AG-X plus (manufactured by Shimadzu Corporation) was used as the universal testing machine. The test piece was set to a size of 150 mm in length and 15 mm in width.

(Bending elastic modulus and bending stress)

The bending elastic modulus and the bending stress were measured using a universal testing machine. An Instron 5985 (manufactured by Instron Japan) was used as a universal testing machine. The test piece was set to a size of 150 mm in length and 15 mm in width.

(Interlayer strength)

The measurement was performed using a universal testing machine. An autograph AG-X plus (manufactured by Shimadzu Corporation) was used as a universal testing machine. The test piece was set to a size of 20 mm in length and 20 mm in width.

(Tensile elastic modulus and tensile stress as water resistance evaluation)

The tensile elastic modulus and the tensile stress were measured using a universal testing machine. An AUTOGRAPH AG-X plus (manufactured by Shimadzu Corporation) was used as the universal testing machine. The test piece was set to a size of 150 mm in length and 15 mm in width, immersed in pure water for 24 hours, and then measured.

(Bending elastic modulus and bending stress as water resistance evaluation)

The bending elastic modulus and the bending stress were measured using a universal testing machine. An AUTOGRAPH AG-X plus (manufactured by Shimadzu Corporation) was used as the universal testing machine. The test piece was set to a size of 150 mm in length and 15 mm in width, immersed in pure water for 24 hours, and then measured.

(Tensile elastic modulus and tensile stress as oil resistance evaluation)

The tensile elastic modulus and the tensile stress were measured using a universal testing machine. An AUTOGRAPH AG-X plus (manufactured by Shimadzu Corporation) was used as the universal testing machine. The test piece was set to a size of 150 mm in length and 15 mm in width, immersed in grease (MULTEMP SRL, manufactured by Kyodo Yushi Co., Ltd.) for 24 hours, and then measured.

(Bending elastic modulus and bending stress as oil resistance evaluation)

The tensile elastic modulus and the tensile stress were measured using a universal testing machine. An AUTOGRAPH AG-X plus (manufactured by Shimadzu Corporation) was used as the universal testing machine. The test piece was set to a size of 150 mm in length and 15 mm in width, immersed in grease (MULTEMP SRL, manufactured by Kyodo Yushi Co., Ltd.) for 24 hours, and then measured.

(3) Conclusion

As listed in Table 1, the following items were confirmed based on the results of the X-ray diffraction,

(a) The cellulose formed bodies of Examples 1 to 3 had a cellulose I type crystal structure.
(b) The degree of crystallinity was lower in order of Examples 1, 2, and 3.
(c) The crystallinity index obtained using a nuclear magnetic resonance device was also lower in order of Examples 1, 2, and 3.
(d) The first degree of crystallinity and the second degree of crystallinity obtained using a Fourier transform infrared spectrometer were also lower in order of Examples 1, 2, and 3.
(e) The maximum water content was also lower in order of Examples 1, 2, and 3.

That is, it was verified that the amorphization of cellulose proceeded in order of Examples 1, 2, and 3.

## Claims

**1.** A method for producing a cellulose formed body, comprising:

generating an aqueous dispersion having a concentration of greater than 0% and 10% or less, which contains at least one of a natural cellulose fiber having a fiber width of greater than 1 μm and 100 μm or less and a cellulose microfiber having a fiber width of 1 nm or greater and 1 μm or less;
press-forming the aqueous dispersion while dehydrating the aqueous dispersion by applying a pressurizing force with a pressing pressure of greater than 0 $kgf/cm^2$ and 30 $kgf/cm^2$ or less to generate a dehydrated body having a moisture content of 0 times or greater and 10 times or less a weight of cellulose; and
drying the dehydrated body by applying a pressurizing force with a pressing pressure of greater than 0 MPa and 10 MPa or less at a temperature of 100°C or higher and 150°C or lower.

**2.** A method for producing a cellulose formed body, comprising:

generating an aqueous dispersion having a concentration of greater than 0% and 10% or less, which contains at least one of a natural cellulose fiber having a fiber width of greater than 1 μm and 100 μm or less and a cellulose microfiber having a fiber width of 1 nm or greater and 1 μm or less;
applying the aqueous dispersion in a sheet shape; and
drying the applied aqueous dispersion at a temperature of 100°C or higher and 150°C or lower.

**3.** The method for producing a cellulose formed body according to Claim 1 or 2,

wherein the cellulose microfiber is defibrated and branched from the natural cellulose fiber having a fiber width of greater than 1 μm and 100 μm or less, and
the natural cellulose fiber from which the cellulose microfiber is branched is used as the natural cellulose fiber that generates the aqueous dispersion.

**4.** The method for producing a cellulose formed body according to Claim 1 or 2,

wherein the cellulose microfiber is defibrated and branched from the natural cellulose fiber having a fiber width of 1 nm or greater and 1 μm or less, and
the natural cellulose fiber from which the cellulose microfiber is branched is used as the natural cellulose fiber that generates the aqueous dispersion.

**5.** The method for producing a cellulose formed body according to Claim 1 or 2,

wherein the natural cellulose fiber is defibrated to be a fiber width of 1 nm or greater and 1 μm or less to generate the cellulose microfiber,
the cellulose microfiber is defibrated until a shaft disappears, and
a mixture of the cellulose microfiber and the defibrated cellulose microfiber is used as the natural cellulose fiber that generates the aqueous dispersion.

**6.** The method for producing a cellulose formed body according to Claim 1 or 2,

wherein the natural cellulose fiber is defibrated to be a fiber width of 1 nm or greater and 1 μm or less to generate the cellulose microfiber,
the cellulose microfiber is defibrated until a shaft disappears, and
the defibrated cellulose microfiber is used as the natural cellulose fiber that generates the aqueous dispersion.

**7.** A cellulose formed body comprising:

a natural cellulose fiber that includes a cellulose microfiber having a fiber width of 1 nm or greater and 1 μm or less, wherein a degree of crystallinity obtained from Equation (1) is 0% or greater and 80% or less,

[Equation sequence number 1]

$$\text{Degree of crystallinity (\%)} = (1 - I_{am}/I_{200}) \times 100 \qquad (1)$$

I: Each diffraction intensity measured by X-ray diffraction method
$I_{am}$: Diffraction intensity of amorphous portion (2θ = 18.5°)
$I_{200}$: Diffraction intensity of crystal lattice plane (200 plane, peak around 2θ=22.6) characteristic of cellulose I type in natural cellulose

**8.** A cellulose formed body comprising:

a natural cellulose fiber that includes a cellulose microfiber having a fiber width of 1 nm or greater and 1 μm or less, wherein a degree of crystallinity obtained from Equation (2) is 0% or greater and 55% or less,
[Equation sequence number 2]

$$\text{Degree of crystallinity (\%)} = \{(\text{Area crystal})/(\text{Area crystal} + \text{Area non-crystal})\} \times 100 \qquad (2)$$

Area crystal: area under curve obtained by integrating each crystal curve when X-ray diffraction graph, which is composite of plurality of graphs, is separated into plurality of single curves using peak division in curve fitting method
Area non-crystal: area under curve obtained by integrating non-crystal curve obtained in the same manner as that for Area crystal

**9.** A cellulose formed body comprising:

a natural cellulose fiber that includes a cellulose microfiber having a fiber width of 1 nm or greater and 1 μm or less, wherein a crystallinity index obtained from Equation (3) using an integral value of a signal obtained from a nuclear magnetic resonance device is 0% or greater and 48% or less,
[Equation sequence number 3]

$$\text{Crystallinity index} = (\text{signal integral value of 93 ppm - 86 ppm})/\{(\text{signal integral value of 93 ppm - 86 ppm}) + (\text{signal integral value of 86 ppm - 80 ppm})\} \times 100 \qquad (3)$$

Signal of 93 ppm - 86 ppm: involved in crystallinity
Signal of 86 ppm - 80 ppm: involved in non-crystallinity

**10.** A cellulose formed body comprising:

a natural cellulose fiber that includes a cellulose microfiber having a fiber width of 1 nm or greater and 1 μm or less, wherein a first degree of crystallinity obtained from Equation (4) in infrared absorption spectra measured by a Fourier transform infrared spectrometer is 0 or greater and 1 or less,
[Equation sequence number 4]

$$\text{First degree of crystallinity (Cr.R.}_1\text{; the ratio of crystallinity 1)} = A_{1372}/A_{2900} \quad (4)$$

$A_{1372}$: Spectral intensity at wavelength of 1372 ($cm^{-1}$)
$A_{2900}$: Spectral intensity at wavelength of 2900 ($cm^{-1}$)

**11.** A cellulose formed body comprising:

a natural cellulose fiber that includes a cellulose microfiber having a fiber width of 1 nm or greater and 1 $\mu$m or less, wherein a second degree of crystallinity obtained from Equation (5) in infrared absorption spectra measured by a Fourier transform infrared spectrometer is 0 or greater and 0.5 or less,
[Equation sequence number 5]

$$\text{Second degree of crystallinity (Cr.R.}_2\text{; the ratio of crystallinity 2)} = \quad (5)$$

A1430/A893
$A_{1430}$: Spectral intensity at wavelength of 1430($cm^{-1}$)
$A_{893}$: Spectral intensity at wavelength of 893 ($cm^{-1}$)

**12.** A cellulose formed body comprising:

a natural cellulose fiber that includes a cellulose microfiber having a fiber width of 1 nm or greater and 1 $\mu$m or less, wherein the cellulose formed body has a maximum water content of 0% by mass or greater and 5% by mass or less.

**13.** The cellulose formed body according to Claim 12,
wherein the cellulose formed body has a maximum water content of 0% by mass or greater and 3% by mass or less.

**14.** The cellulose formed body according to any one of Claims 7 to 13, further comprising:

the natural cellulose fiber that includes a cellulose microfiber having a fiber width of 1 nm or greater and 1 $\mu$m or less,
wherein an X-ray diffraction pattern measured by an X-ray diffractometer (radiation source CuK$\alpha$) has
one or two peaks in $13° \leq 2\theta \leq 18°$,
one peak in $18° \leq 2\theta \leq 30°$, and
one peak in $30° \leq 2\theta \leq 40°$.

**15.** A cellulose formed body comprising:

a natural cellulose fiber that includes a cellulose microfiber having a fiber width of 1 nm or greater and 1 $\mu$m or less, wherein an oxygen permeability over a measurement time of 200 hours, which is measured by an oxygen permeability measuring device (coulometric method), is 0.3 $cc/m^2$/day or greater and 7.0 $cc/m^2$/day or less in terms of a thickness of 25 $\mu$m.

**16.** The cellulose formed body according to any one of Claims 7 to 13,
wherein the natural cellulose fiber includes a cellulose fiber having a fiber width of 1 $\mu$m or greater and 100 $\mu$m or less, in which the cellulose microfiber is branched from a surface.

**17.** The cellulose formed body according to any one of Claims 7 to 13,

wherein the natural cellulose fiber is the cellulose microfiber having a fiber width of 1 nm or greater and 1 $\mu$m or less, and
the cellulose microfiber includes a fiber branched from the cellulose microfiber.

**18.** The cellulose formed body according to any one of Claims 7 to 13,
wherein the natural cellulose fiber is a mixture of the cellulose microfiber having a fiber width of 1 nm or greater and 1 $\mu$m or less and the cellulose microfiber having no shaft.

19. The cellulose formed body according to any one of Claims 7 to 13, wherein the natural cellulose fiber is the cellulose microfiber having a fiber width of 1 nm or greater and 1 μm or less and having no shaft.

20. The cellulose formed body according to any one of Claims 7 to 13, wherein the cellulose formed body has a density of 1.45 $g/cm^3$ or greater and 2.00 $g/cm^3$ or less.

21. The cellulose formed body according to any one of Claims 7 to 13, wherein the cellulose formed body has a tensile elastic modulus of 6 GPa or greater and 100 GPa or less at 20°C.

22. The cellulose formed body according to any one of Claims 7 to 13, wherein the cellulose formed body has a tensile elastic modulus of 6 GPa or greater and 100 GPa or less at 90°C.

23. The cellulose formed body according to any one of Claims 7 to 13, wherein the cellulose formed body has a tensile stress of 100 MPa or greater and 10 GPa or less at 20°C.

24. The cellulose formed body according to any one of Claims 7 to 13, wherein the cellulose formed body has a tensile stress of 90 MPa or greater and 10 GPa or less at 90°C.

25. The cellulose formed body according to any one of Claims 7 to 13, wherein the cellulose formed body has a bending elastic modulus of 11 GPa or greater and 100 GPa or less at 20°C.

26. The cellulose formed body according to any one of Claims 7 to 13, wherein the cellulose formed body has a bending elastic modulus of 8 GPa or greater and 100 GPa or less at 90°C.

27. The cellulose formed body according to any one of Claims 7 to 13, wherein the cellulose formed body has a bending stress of 80 MPa or greater and 10 GPa or less at 20°C.

28. The cellulose formed body according to any one of Claims 7 to 13, wherein the cellulose formed body has a bending stress of 60 MPa or greater and 10 GPa or less at 90°C.

29. The cellulose formed body according to any one of Claims 7 to 13, wherein the cellulose formed body has an interlayer strength of 11 MPa or greater and 10 GPa or less.

30. The cellulose formed body according to any one of Claims 7 to 13, wherein the cellulose formed body has an Izod impact strength without a notch of 36 $kJ/m^2$ or greater and 1000 $kJ/m^2$ or less at 20°C.

31. The cellulose formed body according to any one of Claims 7 to 13, wherein the cellulose formed body has a D hardness of 80 or greater and 1000 or less at 20°C, which is measured by a Rockwell durometer.

32. The cellulose formed body according to any one of Claims 7 to 13, wherein a tensile elastic modulus after 24 hours, which is measured as evaluation of oil resistance, is 6 GPa or greater and 100 GPa or less.

33. The cellulose formed body according to any one of Claims 7 to 13, wherein a tensile stress after 24 hours, which is measured as evaluation of oil resistance, is 100 MPa or greater and 10 GPa or less.

34. The cellulose formed body according to any one of Claims 7 to 13, wherein a bending elastic modulus after 24 hours, which is measured as evaluation of oil resistance, is 13 GPa or greater and 100 GPa or less.

35. The cellulose formed body according to any one of Claims 7 to 13, wherein a bending stress after 24 hours, which is measured as evaluation of oil resistance, is 100 MPa or greater and 10 GPa or less.

Intensity
45000
40000
35000
30000
25000
20000
15000
10000
5000
0
0
5
10
15
20
25
30
35
40
2θ / deg
I200
Iam

FIG. 2

Intensity
45000
40000
35000
30000
25000
20000
15000
10000
5000
0
10
15
20
25
30
2θ / deg
Value measured by XRD
(110)
Non-crystal
(200)

FIG. 3

110
100
90
80
70
60
50
ppm
48.68
51.32

FIG. 4

110
100
90
80
70
60
50
ppm
47.08
52.92

FIG. 5

110
100
90
80
70
60
50
ppm
41.81
58.19

FIG. 6

2.0
1.5
1.0
0.5
0.0
Cr.R.1(A1372/A2900)
Example 1
Example 2
Example 3

*FIG. 7*

2.0
1.5
1.0
0.5
0.0
Cr.R.2(A1430/A893)
Example 1
Example 2
Example 3

*FIG. 8*

*FIG. 9*

*FIG. 10*

*FIG. 11*

45000
40000
35000
30000
25000
20000
15000
10000
5000
0
Intensity
(1$\bar{1}$0)
(110)
(200)
(004)
0
5
10
15
20
25
30
35
40
2θ / deg

## INTERNATIONAL SEARCH REPORT

International application No.
**PCT/JP2023/037607**

**A. CLASSIFICATION OF SUBJECT MATTER**

***D21H 11/18***(2006.01)i; ***C08J 5/18***(2006.01)i; ***C08L 1/02***(2006.01)i; ***D21J 1/00***(2006.01)i; ***D21J 3/00***(2006.01)i
FI: D21H11/18; C08J5/18; C08L1/02; D21J1/00; D21J3/00

According to International Patent Classification (IPC) or to both national classification and IPC

**B. FIELDS SEARCHED**

Minimum documentation searched (classification system followed by classification symbols)

D21H11/18; C08J5/18; C08L1/02; D21J1/00; D21J3/00

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2019-166698 A (DAIO PAPER CORPORATION) 03 October 2019 (2019-10-03) example 1 | 1, 3-6 |
| A | example 1 | 2, 7-35 |
| X | JP 2021-006666 A (DAIO PAPER CORPORATION) 21 January 2021 (2021-01-21) examples | 1, 3-6 |
| A | examples | 2, 7-35 |
| X | JP 2018-100466 A (RISHO KOGYO KK) 28 June 2018 (2018-06-28) example 1 | 1, 3-6, 12, 13, 16-35 |
| A | example 1 | 2, 7-11, 14, 15 |
| X | JP 5-148387 A (AGENCY OF IND SCIENCE & TECHNOL) 15 June 1993 (1993-06-15) example 1, paragraph [0012] | 2 |
| A | example 1, paragraph [0012] | 1, 3-35 |

☑ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **22 December 2023** | **09 January 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

INTERNATIONAL SEARCH REPORT

International application No.
PCT/JP2023/037607

C. DOCUMENTS CONSIDERED TO BE RELEVANT

| Category* | Citation of document, with indication, where appropriate, of the relevant passages | Relevant to claim No. |
|---|---|---|
| X | JP 2023-518785 A (STORA ENSO OYJ) 08 May 2023 (2023-05-08) claim 26 | 15 |
| A | claim 26 | 1-14, 16-35 |
| A | WO 2019/138588 A1 (NATIONAL UNIVERSITY CORPORATION OITA UNIVERSITY) 18 July 2019 (2019-07-18) fig. 6 | 1-35 |

Form PCT/ISA/210 (second sheet) (January 2015)

**INTERNATIONAL SEARCH REPORT**
**Information on patent family members**

International application No.
**PCT/JP2023/037607**

| Patent document cited in search report | Publication date (day/month/year) | Patent family member(s) | Publication date (day/month/year) |
|---|---|---|---|
| JP 2019-166698 A | 03 October 2019 | (Family: none) | |
| JP 2021-006666 A | 21 January 2021 | (Family: none) | |
| JP 2018-100466 A | 28 June 2018 | (Family: none) | |
| JP 5-148387 A | 15 June 1993 | (Family: none) | |
| JP 2023-518785 A | 08 May 2023 | US 2023/0193559 A1<br>claim 26<br>WO 2021/191771 A1<br>EP 4127031 A1<br>SE 2050317 A<br>CN 115315468 A<br>CA 3174002 A<br>SE 2050317 A1 | |
| WO 2019/138588 A1 | 18 July 2019 | US 2020/0224365 A1<br>fig. 6<br>EP 3739118 A1<br>CN 111133146 A<br>KR 10-2020-0088278 A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2016094683 A
- JP 2019084073 A
- JP 2021050463 A